# EUROPÄISCHE PATENTSCHRIFT

(11) **EP 0 560 342 B1**
(45) Veröffentlichungstag und Bekanntmachung des Hinweises auf die Patenterteilung: **08.10.1997**
(21) Anmeldenummer: 93103880.6
(22) Anmeldetag: 10.03.1993
(51) Int. Cl.: G06F 11/00

(54) **Verfahren zum Untersuchen des Ablaufs eines in einer Hardware-Beschreibungssprache geschriebenen Programms**
Method for debugging HDL-programs
Méthode pour le débogage de programmes HDL

(30) Priorität: 13.03.1992 DE 4208162
(43) Veröffentlichungstag der Anmeldung: 15.09.1993
(73) Patentinhaber: SIEMENS AKTIENGESELLSCHAFT, 80333 München (DE)
(72) Erfinder: Ecker, Wolfgang, Dipl.-Ing., W-8000 München 70 (DE); Gabler, Thomas, Dipl.-Ing., w-8025 Unterhaching (DE); Gutzki, Martin, Dipl.-Ing., D-80799 München (DE)

(56) Entgegenhaltungen:
- 'Microsoft C Optimizing Compiler' 1987 , MICROSOFT CORPORATION , U.S. AND CANADA Language Reference

## Beschreibung

Hardware-Beschreibungssprachen oder HDLs sind bekannt und dienen zur Beschreibung von elektronischen Schaltungen und aus elektronischen Schaltungen bestehenden elektronischen Systemen, im folgenden Systeme genannt. Diese Beschreibung ergibt ein HDL-Programm aus HDL-Anweisungen, durch das die Simulation des beschriebenen Systems auf einem Rechner möglich wird. Dazu ist es erforderlich, daß das HDL-Programm in eine Zwischensprache, z.B. C-Sprache, übersetzt wird und dann das Zwischensprachenprogramm mit Hilfe eines Compilers in die Maschinensprache übersetzt wird. Da bei der Beschreibung von elektronischen Systemem z.B. auch Laufzeiten oder parallele Abläufe zu berücksichtigen sind, muß zusätzlich ein Laufzeitsystem oder ein Simulator vorgesehen werden, der beim Rechnerlauf dafür sorgt, daß die in dem elektronischen System auftretenden Signale zum richtigen Zeitpunkt erscheinen. Aus diesem Grunde wird das Maschinenprogramm durch einen Binder mit der Laufzeitinformation des Laufzeitsystems zum ablauffähigen Programm gebunden. Dieses Programm läuft auf dem Rechner ab und ergibt eine Simulation des beschriebenen elektronischen Systems.

Programme in HDL-Sprache müssen ebenso wie Programme in sonstigen Sprachen bei der Fehlersuche untersucht werden. Dazu werden Debugger verwendet, die es gestatten, u.a. das Programm an vom Benutzer vorgebbaren Stellen anzuhalten. Der Debugger gibt dann z.B. am Bildschirm die Ergebnisse aus, die der Programmlauf bis zu dieser Stelle erbracht hat. Der Benutzer kann feststellen, ob diese Ergebnisse richtig sind oder nicht. Solche Debugger sind für eine Reihe von Sprachen bekannt, z.B. für Pascal oder C. Die Debugger unterstützen also die Fehlersuche, indem das schrittweise Abarbeiten des Programms ermöglicht und visualisiert wird, zum anderen Werte von Variablen, Konstanten usw. auch dem Benutzer zugängig gemacht werden. Der Debugger kann auch Informationen über Typen von Variablen und Konstanten, Hierarchien im Programmtext usw. liefern. Jedoch sind für rein sequentielle grammiersprachen entwickelte Debugger für die Hardware-Beschreibungssprache nicht direkt einsetzbar, da sie nur zur Abarbeitung von sequentiellen Programmtexten befähigt sind, jedoch die Behandlung von parallelen Abläufen und zeitlich abhängigen Abläufen nicht unterstützen.

Die Entwicklung eines speziellen HDL-Debuggers wäre allerdings sehr aufwendig. Das der Erfindung zugrundeliegende Problem besteht deshalb darin, ein Verfahren anzugeben, mit dem kostengünstig und unter Verwendung eines vorhandenen Debuggers die Funktion eines HDL-Debuggers erreicht wird. Das Problem wird gemäß den Merkmalen des Patentanspruchs 1 gelöst.

Es wird somit bereits ein vorliegender Zwischensprachendebugger verwendet. Der Zwischensprachendebugger kann z.B. ein Debugger für die C-Sprache oder für PASCAL sein. Es handelt sich dabei um einen Standard-Debugger. Der Debugger behandelt das übersetzte HDL-Programm genauso wie ein sequentielles Programm. Jedoch wird durch die Art und Weise, wie die Symbol-Tabelle generiert und verwendet wird, erreicht, daß für den Benutzer der Eindruck entsteht, er würde mit einem HDL-Debugger arbeiten. Man kann auch sagen, daß der HDL-Debugger als eine weitere Kontrollschicht über den Standard-Debugger implementiert ist.

Andere Weiterbildungen der Erfindung ergeben sich aus den Unteransprüchen.

Anhand von Ausführungsbeispielen, die in den Figuren dargestellt sind, wird die Erfindung weiter erläutert. Es zeigen
- Figur 1: ein Prinzipbild der Umsetzung eines HDL-Programms in ein ausführbares Maschinen-Programm,
- Figur 2: die Art und Weise, wie das HDL-Programm bei der Umsetzung in das Zwischenprogramm geändert wird, um die Zuordnung einer HDL-Anweisung zu den entsprechenden Zwischensprachanweisungen festzulegen,
- Figur 3: eine prinzipielle Darstellung der Zuordnung von HDL-Anweisungen zu Anweisungen in der Zwischensprache und Anweisungen in der Maschinensprache,
- Figur 4: der Aufbau der Symboltabellen, die für die Zuordnung von HDL-Anweisungen zu Anweisungen im Maschinencode verwendet wird.

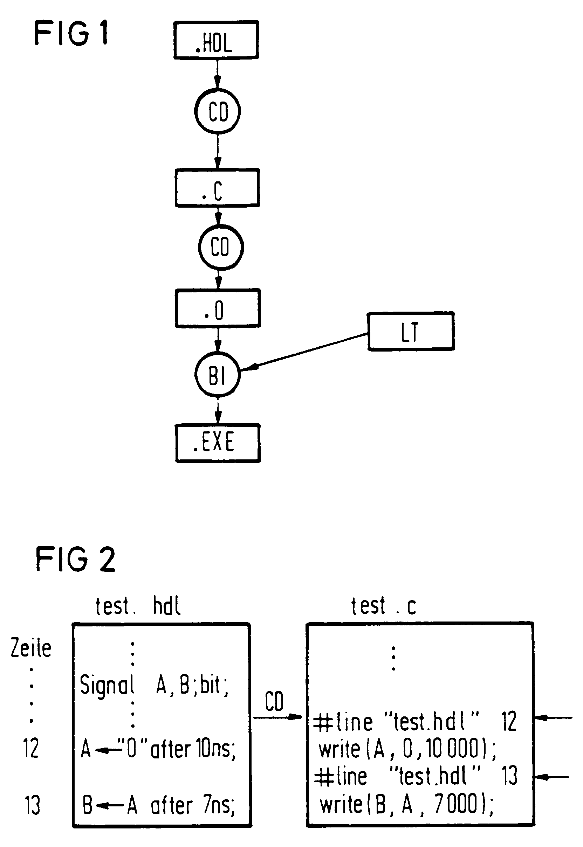

Figur 1 zeigt prinzipiell, wie ein Programm in Hardware-Beschreibungssprache (HDL), mit dem z.B. ein elektronisches beschrieben wird, in ein für einen Rechner ablauffähiges Programm umgesetzt wird. Diese Vorgehensweise ist bekannt und soll darum nur kurz erläutert werden:
Das Programm in HDL-Sprache, im folgenden HDL-Programm genannt, wird über einen Code-Generator CD in eine Zwischensprache, z.B. C-Sprache, übersetzt. Das Zwischensprachenprogramm wird dann weiter mit einem Compiler CO in Maschinensprache O übersetzt, wobei auch eine Symboltabelle ST erzeugt wird, deren Aufbau z.B. aus Figur 4 linke Spalte erkennbar ist. In dieser Symboltabelle ST steht für jede Anweisung B der Zwischensprache, z.B. der C-Sprache, Adresseninformation AC, die auf den zugeordneten Anweisungsblock in der Maschinensprache, in Figur 4 mit O bezeichnet, hinweist. Da normalerweise die Ausführung eines Befehles B in der Zwischensprache eine Mehrzahl von Anweisungen in der Maschinensprache erforderlich macht, kann auf diese Weise eine eindeutige Zuordnung jedes Befehles B in der Zwischensprache zu dem Block von Maschinenanweisungen vorgenommen werden.

Nachdem durch den Compiler CO sowohl die Symboltabelle ST als auch das Programm in Maschinensprache erstellt worden ist, muß noch das ablauffähige Programm für den Rechner erzeugt werden. Da die Art der Beschreibungssprache HDL auch erlaubt, parallele Abläufe in einem System bzw. zeitabhängiges Auftreten von Signalen in einem System zu berücksichtigen, muß mit Hilfe des Laufzeitsystems LT die Anordnung der Maschinenanweisungen in der zeitlichen Folge deren Auftretens erzeugt werden. Dies erfolgt mit Hilfe eines Binders BI, der das Maschinenprogramm O mit den Anweisungen des Laufzeitssystems zu einem ablauffähigen Programm exe bindet. Dieses Programm läuft dann auf einem Rechner ab und erlaubt die Simulation des mit der HDL-Sprache beschriebenen Systems.

Zum Beispiel bei der Fehlersuche ist es zweckmäßig, wenn ein Programm nach jeder Anweisung angehalten werden kann und beobachtet werden kann, welche Ergebnisse das Programm bis zu dieser Anweisung liefert. Dazu wird üblicherweise ein Debugger verwendet. Um nun zu vermeiden, daß für die HDL-Sprache ein spezieller Debugger mit großem Aufwand entwickelt werden muß, wird erfindungsgemäß ein standardmäßiger Debugger verwendet, der für die Zwischensprache, z.B. C, bereits vorhanden ist. Dazu ist erforderlich, daß die Umsetzung des HDL-Programms in die Maschinensprache geändert wird. Wie Figur 2 zeigt, fügt der Codegenerator CD bei der Umsetzung des HDL-Programms in das Zwischensprachenprogramm Anweisungen in das Zwischensprachenprogramm ein, die angeben, welche Zwischenspracheanweisungen einer Anweisung in HDL-Sprache entsprechen. In Figur 2 werden z.B. zwei Anweisungen des HDL-Programms, das mit Test. HDL bezeichnet ist, in zwei Anweisungen der Zwischensprache umgesetzt, die Teile des Zwischenspracheprogramms Test.C sind. Der Codegenerator CD fügt nun in die Anweisungsfolge des Zwischenspracheprogramms Test.C jeweils vor die Zwischensprachenbefehle, die einer Anweisung in HDL-Sprache entsprechen, eine Anweisung ein, die diese Zuordnung beschreibt. Zum Beispiel wird nach Figur 2 vor die einer HDL-Anweisung entsprechende erste Anweisung des bei der Ausführung der HDL-Anweisung erforderlichen Zwischensprachen-Anweisungen eine zusätzliche Anweisung in Zwischensprache eingefügt, die Bezug nimmt auf die Zeilennummer der zugeordneten HDL-Anweisung.

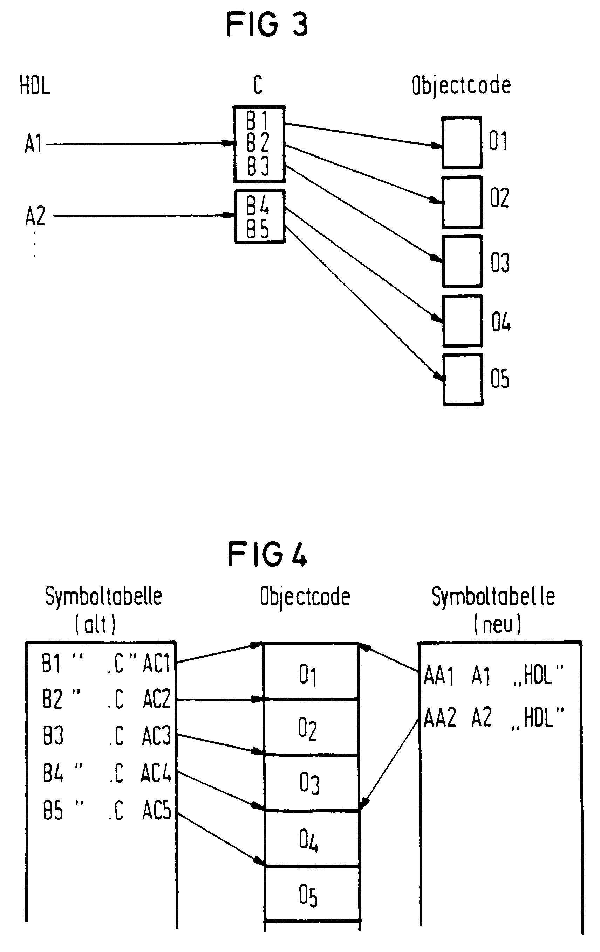

Das so durch den Codegenerator CD geänderte Zwischensprachenprogramm wird nun dem Compiler CO zugeführt, der daraus das Maschinenprogramm generiert. Dabei verwendet der Compiler die zusätzlichen Zwischensprachenanweisungen nur zur Erstellung des Inhalts der Symboltabelle ST. Diese zusätzlichen Anweisungen werden nicht in das Maschinenprogramm übernommen. Die Zuordnung von Anweisungen A eines HDL-Programms zu Anweisungen B eines Zwischenprogramms und weiterhin zu Anweisungen O eines Maschinenprogramms zeigt Figur 3. Zur Ausführung einer Anweisung in HDL-Sprache sind in der Regel mehrere Anweisungen B der Zwischensprache erforderlich. Ebenso gilt, daß jede Anweisung B in Zwischensprache zur Ausführung in der Regel mehrere Anweisungen in Maschinensprache erfordert. In Figur 3 ist eine erste Anweisung A1 in HDL-Sprache in drei Anweisungen B1 bis B3 in Zwischensprache übersetzt, wobei jede Anweisung B1 bis B3 in Zwischensprache jeweils einen Block O1, O2, O3 in Maschinensprache erfordert. Entsprechendes gilt für eine zweite Anweisung A2 in HDL-Sprache.

Um eine Zuordnung zwischen den HDL-Anweisungen A zu den schensprachenanweisungen B und weiter zu den Maschinensprachenanweisungen O herzustellen, wird eine Symboltabelle ST verwendet. Diese ist im Prinzip in Figur 4 gezeigt. In einer mittleren Spalte ist die Aufeinanderfolge von Blöcken O in der Maschinensprache dargestellt. Diese Blöcke in Maschinensprache können z.B. in einem Speicher stehen. Ohne Verwendung des erfindungsgemäßen Verfahrens würde die Symboltabelle so aussehen, wie es in der linken Spalte der Figur 4 gezeigt ist. Hier ist nur ein Bezug zwischen der Zwischensprache und der Maschinensprache hergestellt. In der Symboltabelle könnte dabei z.B. die Zwischensprachenanweisung B1 bis B5, der Name des Programms, z.B. .C und eine Adresseninformation AC1 bis AC5 stehen, die jeweils auf den ersten Maschinenbefehl des zugeordneten Blockes von Maschinenbefehlen zeigt.

Durch die Änderung des Programms gemäß der Erfindung steht in der Symboltabelle (rechte Spalte der Figur) jetzt die HDL-Anweisung A1, A2, der Name des Programms (HDL) und eine Adresseninformation AA, die auf den ersten Maschinenbefehl aus der jeweiligen HDL Anweisung zugeordneten Blockes von Maschinenbefehlen zeigt. Damit wird eine eindeutige Zuordnung zwischen jeder Anweisung A des HDL-Programms und den zugeordneten Blöcken von Maschinenanweisungen in der Symboltabelle festgelegt. Wenn somit beim Debuggen unter Verwendung des Zwischensprachen-Debuggers der Benutzer die Anweisung gibt, nach Ausführung der ersten Anweisung A1 das Programm anzuhalten, dann kann über die Symboltabelle ST der für die Ausführung der Anweisung A1 erforderliche Teil des Maschinenprogramms festgestellt werden, und zwar über die Startadresse des der Anweisung A1 zugeordneten Blockes von Maschinenanweisungen und der Anweisung A2 zugeordneten Blockes von Maschinenanweisungen. Umgekehrt ist es möglich, die nach Ausführung der Anweisung A1, also nach Ausführung der Blöcke O1 bis O3 des Maschinenprogramms, erzeugten Werte dem Benutzer darzustellen als Ergebnisse, die nach Ausführung der Anweisung A1 vorliegen. Dem Benutzer erscheint es so, als ob ein HDL-Debugger tätig wäre. In Wirklichkeit wird jedoch ein Zwischensprachen-Debugger verwendet und lediglich durch Änderung des durch den Code-Generator erzeugten schensprachenprogramms und durch entsprechende Änderung der Symboltabelle ST dieses Ergebnis erreicht. Eine zusätzliche Entwicklung eines HDL-Debuggers ist also nicht mehr erforderlich, vielmehr kann ein Standard-Zwischensprachen-Debugger verwendet werden.

## Patentansprüche

1. Verfahren zum Untersuchen des Ablaufs eines in einer Hardware-Beschreibungssprache (HDL) geschriebenen Programms
- bei dem HDL-Anweisungen des HDL-Programms durch einen Codegenerator (CO) in eine Zwischensprache übersetzt werden und der Codegenerator dabei vor jede einer HDL-Anweisung entsprechenden Anweisungsfolge des Zwischensprachen-Programms eine die Adresse der HDL-Anweisung identifizierende zusätzliche Zwischensprachen-Anweisung einfügt,
- bei dem bei Übersetzung des Zwischensprachenprogramms in das Maschinenprogramm unter Verwendung der zusätzlichen Zwischensprachen-Anweisungen in einer Symboltabelle (ST) angegeben wird, welche Blöcke von Maschinenbefehlen der HDL-Anweisung entsprechen,
- und bei dem das Programm mit Hilfe eines bekannten Zwischensprachen-Debuggers untersucht wird.

2. Verfahren nach Anspruch 1, bei dem die Symbol-Tabelle bei der Übersetzung des Zwischensprachenprogramms in das Maschinenprogramm erzeugt wird, wobei die zusätzlichen Anweisungen nicht in die Maschinensprache übernommen werden.

3. Verfahren nach Anspruch 1 oder 2, bei dem die vom Zwischensprachen-Debugger gelieferten Untersuchungswerte über die Symboltabelle den HDL-Anweisungen zugeordnet werden.

## Claims

1. Method of debugging a program written in a hardware description language (HDL)
- in which HDL instructions of the HDL program are translated by a code generator (CO) into an intermediate language, and the code generator, in so doing, inserts an additional intermediate language instruction identifying the address of the HDL instruction in front of each sequence of instructions corresponding to an HDL instruction,
- in which, as the intermediate language program is translated into the machine program, using the additional intermediate language instructions, a symbol table (ST) is used to indicate which blocks of machine commands correspond to the HDL instruction,
- and in which the program is examined with the aid of a known intermediate language debugger.

2. Method according to Claim 1, in which the symbol table is generated during the translation of the intermediate language program into the machine program, the additional instructions not being taken over into the machine language.

3. Method according to Claim 1 or 2, in which the values from the examination, supplied by the intermediate language debugger, are assigned to the HDL instructions via the symbol table.

## Revendications

1. Procédé pour contrôler le déroulement d'un programme rédigé dans un langage de description de hardware (HDL),
- dans lequel les instructions HDL du programme HDL sont traduites par un générateur de code (CO) dans un langage intermédiaire, le générateur de code insérant avant chaque suite d'instructions correspondant à une instruction HDL du programme de langage intermédiaire une instruction de langage intermédiaire supplémentaire identifiant l'adresse de l'instruction HDL,
- dans lequel, lors de la traduction du programme de langage intermédiaire en programme machine en utilisant les instructions de langage intermédiaire supplémentaires, on indique dans une table de symboles (ST) les blocs d'instructions machine qui correspondent à l'instruction HDL,
- et dans lequel on contrôle le programme à l'aide d'un débogueur de langage intermédiaire connu.

2. Procédé selon la revendication 1, dans lequel la table de symboles est générée lors de la traduction du programme de langage intermédiaire en programme machine, les instructions supplémentaires n'étant pas reprises dans le langage machine.

3. Procédé selon la revendication 1 ou 2, dans lequel les valeurs contrôlées fournies par le débogueur de langage intermédiaire sont associées aux instructions HDL, par l'intermédiaire de la table de symboles.
